# EUROPÄISCHE PATENTANMELDUNG

(11) **EP 0 602 487 A1**
(43) Veröffentlichungstag der Anmeldung: **22.06.1994**
(21) Anmeldenummer: 93119596.0
(22) Anmeldetag: 06.12.1993
(51) Int. Cl.: B65B 59/00, B65G 29/00, B23P 19/04

(54) **Transporteinrichtung für Maschinen zum Behandeln von Flaschen oder dergl. Behälter**

(30) Priorität: 18.12.1992 DE 4242925
(71) Anmelder: KHS Maschinen- und Anlagenbau Aktiengesellschaft, D-47057 Duisburg (DE)
(72) Erfinder: Bernhard, Herbert, D-55578 Wolfsheim (DE)

(57) **Zusammenfassung**

Bei einer Transporteinrichtung für Maschinen zum Behandeln von Flaschen oder dgl. Behälter ist zum Wechseln der Formatteile (F) eine Greifeinrichtung mit wenigstens einem Greifkopf (14) vorgesehen. Diese am Maschinengestell anbringbare Greifeinrichtung wird von einer Steuereinrichtung (13) gesteuert für einen maschinellen Austausch wenigstens eines an einem Funktionsteil gehaltenen Formatteiles (F), das an einer Einrichtung zum Ablegen und Entnehmen des oder der Formatteile bereitgehalten ist.

## Beschreibung

Die Erfindung bezieht sich auf eine Transporteinrichtung für Maschinen zum Behandeln von Flaschen oder dergl. Behälter gemäß Oberbegriff Patentanspruch 1.

Bei Behälter- bzw. Flaschenbehandlungsmaschinen, beispielsweise bei Flaschenfüllmaschinen und dabei auch bei solchen, die mit einem Verschließer zu einem Kombinat zusammengefaßt sind, sind Transporteinrichtungen üblich, deren Transportstrecken zumindest teilweise von um vertikale Achsen umlaufend angetriebenen Transportsternen und zugehörigen Führungsbögen gebildet sind. Insbesondere die Transportsterne sind dabei an den Behälterddurchmesser der jeweils zu behandelnden Behälter angepaßt. Sollen mit ein und derselben Behälterbehandlungsmaschine Behälter mit sehr unterschiedlichem Durchmesser behandelt werden, so ist ein Austauschen der Transportsterne sowie ggf. auch anderer Elemente, beispielsweise der die Führungsbögen bildenden Führungsstücke notwendig, die (Elemente) an den jeweiligen Behälterdurchmesser angepaßt sind. Derartige Elemente werden im Sinne der Erfindung allgemein mit "Formatteile" bezeichnet.

Das Austauschen solcher Formatteile erfolgt bisher manuell und ist äußerst zeitraubend sowie arbeitsintensiv, insbesondere auch in Hinblick darauf, daß die Formatteile und dabei speziell die Transportsterne relativ hohes Gewicht besitzen und es oftmals beim Befestigen eines Formatteils an einem Funktionsteil auch schwierig ist, dieses Formatteil in die für die Befestigung erforderliche genaue Lage zu bringen.

Um das manuelle Austauschen von Transportsternen zu erleichtern, wurde bereits vorgeschlagen, die Transportsterne bzw. den äußeren sternartigen Kranz solcher Transportsterne mit Hilfe von als Schnellverschluß ausgebildeten Befestigungsorganen an nicht austauschbaren Flanschplatten der Transporteinrichtung zu befestigen (EP-A-0 316 001).

"Funktionsteil" im Sinne der Erfindung ist ein Element, an welchem ein Formatteil lösbar bzw. austauschbar gehalten ist. Im Falle von Transportsternen ist das Funktionsteil beispielsweise die Antriebs- oder Lagerwelle, an der der Transportstern im Verwendungsfall vorgesehen ist, oder eine entsprechende Flanschplatte an dieser Welle. Im Falle von anderen, nicht bewegten Formatteilen, beispielsweise von Führungsstücken usw., ist das entsprechende Funktionsteil z.B. ein Halte- oder Lagerelement.

Der Erfindung liegt die Aufgabe zugrunde, eine Transporteinrichtung aufzuzeigen, mit der das Austauschen von Formatteilen im wesentlichen vereinfacht ist.

Zur Lösung dieser Aufgabe ist eine Transporteinrichtung entsprechend dem kennzeichnenden Teil des Patentanspruches 1 ausgebildet.

Mit Hilfe der Greifeinrichtung bzw. des dortigen wenigstens einen Greifkopfes werden die Formatteile beim Austauschen von dem jeweiligen Funktionsteil automatisch bzw. maschinell abgenommen, an die Einrichtung zur Ablage bzw. Lagerung und Entnahme von Formatteilen transportiert. Von dieser Einrichtung werden dann mit Hilfe des wenigstens einen Greifkopfes neue, dort vorhandene Formatteile erfaßt und an das jeweilige Funktionsteil bzw. an die jeweilige Position transportiert, wo das jeweils neue Formatteil dann ebenfalls maschinell durch Verriegeln des Befestigungsorgans befestigt wird.

Die hierbei notwendige Steuerung der Bewegung des Greifkopfes erfolgt durch eine elektronische Steuereinrichtung, die vorzugsweise eine solche mit Rechner ist. Die Steuereinrichtung ist beispielsweise so ausgebildet, daß in einem Speicher dieser Steuereinrichtung u.a. nicht nur die Positionen, an denen die einzelnen Formatteile jeweils bei ihrer Verwendung an der Transporteinrichtung zu befestigen sind, gespeichert sind, und zwar beispielsweise in Form von Koordinaten einer horizontalen Ebene, sondern in diesem Speicher ist auch gespeichert, welches Formatteil jeweils an welchem Ort in der Einrichtung zum Ablegen und Entnehmen der Formatteile abgelegt ist. Die Steuerung kann diesbezüglich so ausgebildet sein, daß jedem Formatteil ein bestimmter Platz in dieser Einrichtung und/oder in einem dort gebildeten Stapel von Formatteilen fest zugeordnet ist oder daß jedes an die Einrichtung zur Aufnahme und Entnahme von Formatteilen geliefertes Formatteil dort an einem vorhandenen freien Platz abgelegt wird und dieser Platz für das betreffende Formatteil im Speicher der Steuereinrichtung gespeichert wird.

Die Bewegung des Greiferkopfes ist beispielsweise eine solche in den drei senkrecht zueinander verlaufenden Raumachsen, oder die Bewegung des Greiferkopfes schließt bevorzugt auch eine Schwenk- oder Drehbewegung dieses Kopfes um eine Raumachse, vorzugsweise um die vertikale Raumachse ein.

Die Erfindung hat insbesondere auch bei Maschinen mit Einhausungen oder Schutzeinrichtungen den Vorteil, daß ein Austauschen von Formatteilen bequem, insbesondere auch ohne ein Öffnen dieser Schutzeinrichtungen möglich ist.

Weiterbildungen der Erfindung sind Gegenstand der Unteransprüche.

Die Erfindung wird im Folgenden anhand der Figuren an einem Ausführungsbeispiel näher erläutert. Es zeigen
- Fig. 1: in vereinfachter perspektivischer Darstellung eine Transporteinrichtung gemäß der Erfindung;
- Fig. 2: in vereinfachter Detaildarstellung den Greifkopf zum Lösen und Austauschen der Formatteile der Transporteinrichtung der Fig. 1, und zwar zusammen mit einem jeweils an den Formatteilen vorgesehenen ersten Kupplungsstück und einem zugehörigen, an der Transporteinrichtung vorgesehenen zweiten Kupplungsstück.

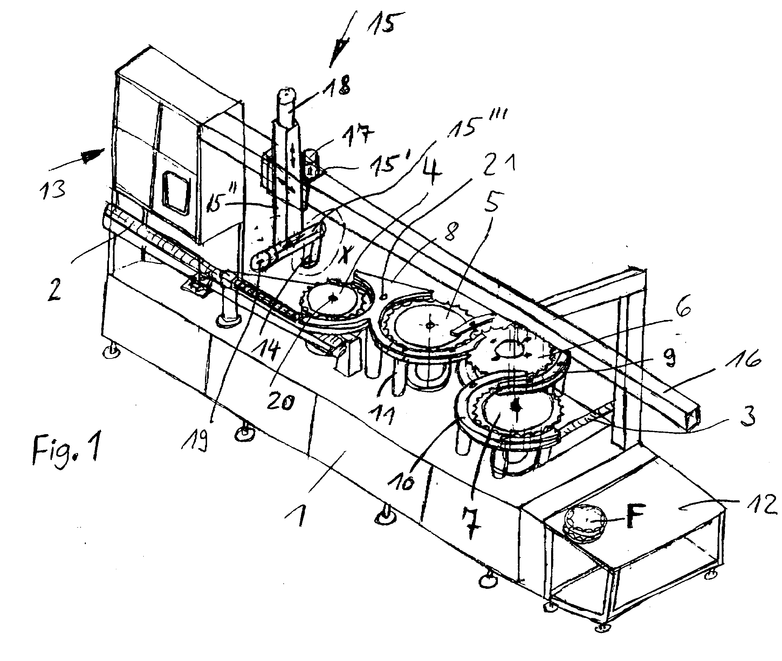

Die Fig. 1 zeigt eine Transporteinrichtung mit einem Maschinengestell 1, an dessen Oberseite zwei jeweils von einer Scharnierbandkette gebildete Transporteure 2 und 3 zum Zuführen von leeren Flaschen (Transporteur 2) sowie zum Abführen von gefüllten und verschlossenen Flaschen (Transporteur 3) vorgesehen sind, und zwar zusätzlich zu Transportsternen 4 - 7, die jeweils an einer vertikalen Welle befestigt und um die vertikale Achse dieser Welle umlaufend angetrieben sind. Den Transportsternen 4 und 5 ist ein Führungsstück 8 zugeordnet, welches für jeden dieser Transportsterne 4 und 5 jeweils einen Führungsbogen bildet. Entsprechende Führungsbögen bzw. Fünrungsstücke 9 und 10 sind auch für die Transportsterne 6 bzw. 7 vorgesehen. Es versteht sich, daß die Führungsstücke 8, 9 und 10 jeweils an der Oberseite des Maschinengestells 1 bzw. an dort fest vorgesehenen Stützelementen 11 befestigt sind.

Der Transportstern 4 bildet den Einlauf- bzw. Einschubstern einer nicht dargestellten Flaschenfüllmaschine. Der Transportstern 5 ist ein Übergabestern zwischen der Füllmaschine und einem nachfolgenden Verschließer. Der Transportstern 6 ist Teil dieses ansonsten nicht dargestellten Verschließers. Der Transportstern 7 bildet den Auslauf- bzw. Übergabestern zwischen dem Verschließer und dem Transporteur 3. Die Transportsterne 4 - 7 sowie die Führungsstücke 8, 9 und 10 bilden Formatteile F.

An die in der Fig. 1 vordere Schmalseite des Maschinengestells 1 schließt sich ein Aufnahme- und Entnahmetisch 12 an. Im Bereich der in der Fig. 1 hinteren Schmalseite ist am Maschinengestell 1, und zwar über dem Transporteur 2 eine elektrische Steuervorrichtung 13 für die Transporteinrichtung und für das bei dieser Transporteinrichtung vorgesehene System zum automatischen bzw. maschinellen Austauschen von Formatteilen F in einem Schaltschrank untergebracht. An der in der Fig. 1 sichtbaren Vorderseite des Schaltschrankes sind auch die notwendigen Betätigungs- bzw. Eingabeelemente sowie Anzeigeelemente angeordnet.

Das System zum Austauschen der Formatteile F besteht im wesentlichen aus einem Greifkopf 14, der an einer Schlittenanordnung 15 vorgesehen ist. Die Schlittenanordnung 15 ist entlang einer horizontalen Führung 16 bewegbar, die sich über die gesamte Länge des Maschinengestells 1 bzw. der Transporteinrichtung von dem die Steuereinrichtung 13 aufnehmenden Schaltschrank 13 bis über den Belade- und Entnahmetisch 12 erstreckt, und zwar mit genügendem Abstand oberhalb der Transporteure 2 und 3 sowie der Transportsterne 4 - 7. Zur Halterung der Führung 16 dienen am Maschinengestell 1 vorgesehene Träger 17. Auch der Schaltschrank kann zur Halterung der Führung 16 mit verwendet sein.

Durch einen ersten Stellantrieb 17 ist die Schlittenanordnung 15 und mit dieser auch der Greifkopf 14 in Längsrichtung der Führung 16 bewegbar. Der Stellantrieb 17 befindet sich dabei an dem unmittelbar an der Führung 16 geführten Teil 15' der Schlittenanordnung 15. Am Teil 15' ist in vertikaler Richtung ein Teil 15'' der Schlittenanordnung 15 mittels eines zweiten Stellantriebes in vertikaler Richtung auf- und abbewegbar verstellbar geführt. Am unteren Ende bildet das Teil 15'' als weiteres Teil 15''' der Schlittenanordnung 15 eine horizontale Führung, und zwar in einer Achsrichtung senkrecht zur Längsachse der Führung 16. Im Teil 15''' ist der Greifkopf 14 mit Hilfe eines dritten Stellantriebes 19 bewegbar. Die Stellantriebe 17 - 19 sind Elektromotoren, beispielsweise Schrittmotoren, die eine exakte Steuerung des Greifkopfes 14 in den vorgenannten drei Raumachsen ermöglichen, und zwar derart, daß die beispielsweise in einem Speicher der elektronischen Steuervorrichtung 13 festgelegten Positionen bzw. Koordinaten der Befestigungspunkte 20 der Transportsterne 4, 5, 6 und 7 bzw. der Befestigungspunkte 21 der Führungsstücke 8, 9 und 10 bei mit dem Stellantrieb 18 angehobenen Greifkopf von diesem genau angefahren und dann durch Absenken des Greifkopfes mit Hilfe des Stellantriebes 18 vom Greifkopf 14 auch exakt getroffen werden können.

Der Greifkopf 14 besitzt an seiner Unterseite drei Greifbacken 22, die um eine vertikale Greifkopfachse GA verteilt vorgesehen sind und spannfutterartig bezogen auf diese Achse radial nach außen bzw. innen bewegbar sind, und zwar durch einen im Greifkopf vorgesehenen elektrischen Greif- oder Spannantrieb, der ebenfalls einen Elektromotor aufweist. Im Bereich der Achse GA weist der Greifkopf 14 an seiner Unterseite ein Verbindungs- oder Kupplungsstück 23 auf, welches von den Greifbacken 22 umschlossen und bei der dargestellten Ausführungsform als ein mit seiner Achse achsgleich mit der Achse GA liegender Innensechskant ausgebildet ist. Das Kupplungsstück ist mittels eines Drehantriebes 24, das ebenfalls Bestandteil des Greiferkopfes 14 ist, um die Achse GA drehbar.

Die Befestigungen der Formatteile F sind dadurch realisiert, daß das jeweilige Formatteil F, d.h. der jeweilige Transportstern 4, 5, 6 und 7 und/oder das jeweilige Führungsstück 8, 9 und 10 einen ein Befestigungsorgan in Form eines Verbindungsbolzens 25 aufweist, der an der Oberseite des Formatteiles F einen sich nach oben hin, d.h. mit zunehmendem Abstand von diesem Formatteil F im Querschnitt vergrößernden Kegel 26 und auf diesen nach oben hin folgend ein Gegenstück 27 in Form eines Sechskants aufweist. An seinem über die Unterseite des Formatteiles F vorstehenden Ende besitzt der Verbindungsbolzen 25 einen senkrecht zur Achse dieses Bolzens liegenden und beidendig über den Umfang des Bolzens vorstehenden Stift 28. Dieses Ende bildet das innere Teil einer Bajonett-Schnellverbindung, dessen anderes Teil als eine bajonettverschlußartige, hülsenartige Aufnahme 29 ausgeführt ist. Die Aufnahme 29 ist an der jeweiligen Welle für den Transportstern 4, 5, 6 bzw. 7 oder an einer dortigen Flanschplatte bzw. an dem jeweiligen Stützelement 11 für die Führungsstücke 8, 9 und 10 vorgesehen.

Bei befestigtem Formatteil F ist der jeweilige Verbindungsbolzen 25 mit dem Stift 28 in der zugehörigen Aufnahme 29 verriegelt. Soll dieses Formatteil F ausgetauscht werden, so wird der Greifkopf 14 über dem betreffenden Befestigungspunkt 20 bzw. 21 positioniert, und zwar derart, daß die Achse GA möglichst achsgleich mit der Achse des Verbindungsbolzens 25 liegt. Anschließend wird der Greifkopf 14 bei geöffneten Greifbacken 22 abgesenkt, so daß das Gegenstück 27 in das Kupplungsstück 23 eingreift und der Kegel 26 von den Greifbacken 22 umschlossen ist. Anschließend werden die Greifbacken 22 geschlossen und dann mit Hilfe des Drehantriebes 24 der Bolzen 25 soweit gedreht, daß die Verbindung zwischen den Bolzen 25 und der Aufnahme 29 gelöst ist. Bei weiterhin geschlossenen Greifbacken 22 wird dann der Greifkopf 14 und mit diesem das betreffende Formatteil F angehoben und an den Belade- und Entnahmetisch 12 transportiert.

Dort wird das Formatteil F an einer für dieses Formatteil F vorgesehenen Position abgelegt. Ein auf dem Belade- und Entnahmetisch bereitstehendes Formatteil F wird in der vorbeschriebenen Weise durch die am dortigen Kegel 26 angreifenden Greifbacken 22 erfaßt und mit Hilfe der Schlittenanordnung 15 an diejenige Position transportiert und dort befestigt, wo zuvor ein auszutauschendes Formatteil F entfernt wurde. Das Befestigen des neuen Formatteiles F erfolgt durch Absenken des Greifkopfes 14 und Einführen des Verbindungsbolzen 25 in die entsprechende Aufnahme 29, durch anschließendes Drehen des Verbindungsbolzens 25 mit Hilfe des Drehantriebes 24 in die verriegelnde Stellung. Anschließend werden die Greifbacken 22 geöffnet, so daß der Greifkopf 14 von dem neuen bzw. ausgetauschten Formatteil F abgehoben werden kann.

Im Detail kann die Verbindung des Greifkopfes 14 und der Schlittenanordnung 15 beim Austauschen der Formatteile F in der unterschiedlichsten Weise erfolgen, beispielsweise derart, daß jeweils ein auszutauschendes Formatteil in der vorbeschriebenen Weise auf den Belade- und Entnahmetisch 12 abgelegt, ein neues Formatteil dort entnommen und an den vorgesehenen Bereich der Transporteinrichtung befestigt wird, bevor das Austauschen eines weiteren Formatteiles F erfolgt.

Mit dem beschriebenen, dem Greiferkopf 14 aufweisenden System ist ein völlig selbsttätiges, maschinelles Austauschen der Formatteile F beispielsweise beim Umstellen von einer Flaschensorte auf eine andere Flaschensorte möglich. Insbesondere ist mit diesem System auch ein einfaches und bequemes Austauschen der Formatteile F bei solchen Behandlungsmaschinen möglich, die eine Einhausung oder eine äußere Schutzeinrichtung bzw. Abdeckung aufweisen, ohne daß diese Schutzeinrichtung geöffnet werden muß. Speziell in Hinblick auf eine hohe Keimfreiheit ist es auch möglich, die Formatteile F auf dem Belade- und Entnahmetisch 12 nicht frei zu lagern, sondern anstelle hiervon eine geschlossene Lagereinrichtung vorzusehen, in der die Formatteile F nach ihrem Einbringen bzw. Ablegen oder vor der jeweiligen Entnahme gereinigt und/oder sterilisiert werden.

Weiterhin ist es grundsätzlich auch möglich, die Schlittenanordnung 15 so auszubilden, daß der Greifkopf 14 auch noch um eine vertikale Achse schwenkbar ist, wofür beispielsweise das Teil 15''' schwenkbar am Teil 15'' der Schlittenanordnung 15 vorgesehen ist.

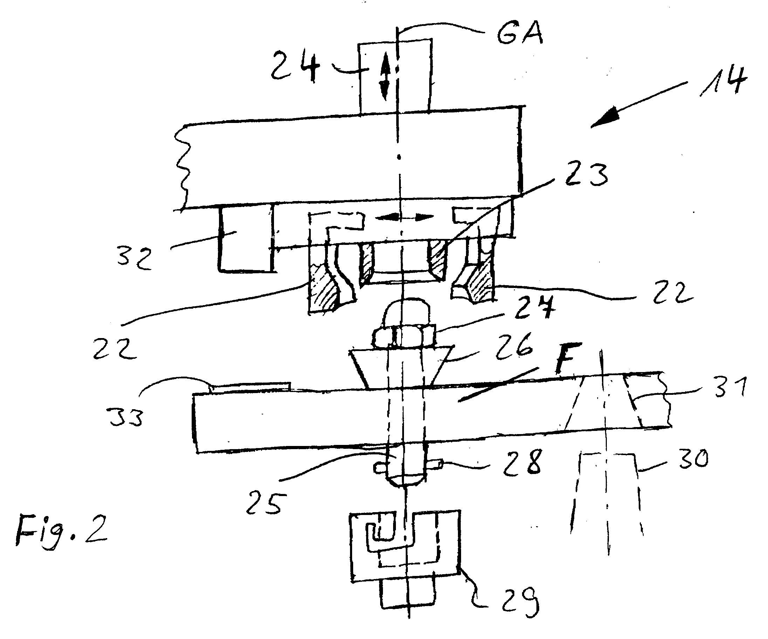

In der Fig. 2 ist mit unterbrochenen Linien noch ein Zentrierstift 30 dargestellt, der an dem jeweiligen Funktionselement vorgesehen ist und mit einer Zentrieröffnung 31 zusammenwirkt, und zwar für eine Zentrierung des Formatteiles F, aber auch für die Übertragung eines Drehmomentes. Weiterhin ist in der Fig. 2 mit 32 schematisch eine Abtasteinrichtung, beispielsweise ein Licht-Scanner bezeichnet, der an der Unterseite des Greifkopfes 14 vorgesehen ist und eine an der Oberseite des Formatteils F vorgesehene Markierung 33 erfaßt oder abtastet, die beispielsweise als Bar-oder Strich-Code ausgeführt ist und z. B. eine Identifikation für das betreffende Formatteil bildet. Diese Identifikation kann dann dazu verwendet werden, um das ordnungsgemäße Austauschen und/oder Ablegen und/oder Entnehmen der Formatteile auf den bzw. von dem Belade- und Entnahmetisch 12 zu überwachen bzw. zu steuern.

Der Belade- und Entnahmetisch 12 kann auch als Wagen ausgeführt sein, wobei dann an diesem Wagen sowie am Maschinengestell 1 spezielle Mittel vorgesehen sind, um den Wagen an einer genau vorgegebenen Position an das Maschinengestell 1 anzudocken.

### Bezugszeichenliste

- 1: Maschinengestell
- 2, 3: Transporteur
- 4 - 7: Transportstern
- 8, 9, 10: Führungsstück
- 11: Stützelement
- 12: Belade- und Entnahmetisch
- 13: Schaltschrank
- 14: Greifkopf
- 15: Schlittenanordnung
- 15', 15'', 15''': Teil
- 16: Führung
- 17, 18, 19: Stellantrieb
- 20, 21: Befestigung
- 22: Greifbacken
- 23: Kupplungsstück
- 24: Drehantrieb
- 25: Verbindungsbolzen
- 26: Kegel
- 27: Gegenstück
- 28: Stift
- 29: Aufnahme
- 30: Zentrierstift
- 31: Zentrieröffnung
- 32: Abtasteinrichtung
- 33: Markierung
- GA: Greifkopfachse
- F: Formatteil

## Patentansprüche

1. Transporteinrichtung für Maschinen zum Behandeln von Flaschen oder dergl. Behälter, mit wenigstens einer an einem Maschinengestell (1) vorgesehenen Transportstrecke für die Behälter, wobei die Transportstrecke zumindest auf einer Teillänge wenigstens von einem Formatteil (F) gebildet ist, welches an wenigstens einem Befestigungspunkt (20, 21) durch mindestens ein Befestigungsorgan (25, 29) an einem Funktionsteil der Transporteinrichtung wieder lösbar gehalten ist, **gekennzeichnet durch** eine an dem Maschinengestell (1) vorgesehene Greifeinrichtung mit wenigstens einem Greifkopf (14), der durch wenigstens einen Antrieb (17, 18, 19) zwischen der Transportstrecke und einer Einrichtung (12) zum Ablegen und Entnehmen von Formatteilen (F) bewegbar ist, durch am Greifkopf (14) vorgesehene Mittel (22) zum Greifen und Halten von Formatteilen (F), mit Mitteln (23, 24) zum motorischen Ent- und Verriegeln des wenigstens einen Befestigungsorgans (25, 29), sowie mit einer Steuereinrichtung (13) zum Steuern der Greifeinrichtung und der Mittel (23, 24) zum Ent- und Verriegeln für einen maschinellen Austausch wenigstens eines an einem Funktionsteil gehaltenen Formatteils (F) mit einem an der Einrichtung (12) zum Ablegen und Entnehmen von Formatteilen (F) vorhandenen Formatteil (F).

2. Transporteinrichtung nach Anspruch 1, dadurch gekennzeichnet, daß der wenigstens eine Greifkopf (14) in einer angehobenen Position oberhalb der Transportstrecke zwischen der Transportstrecke und der Einrichtung (12) zum Ablegen und Entnehmen von Formatteilen (F) bewegbar ist und aus dieser angehobenen Position auf den wenigstens einen Befestigungspunkt (20, 21) des wenigstens einen Formatteils (F) absenkbar ist.

3. Transporteinrichtung nach Anspruch 1 oder 2, dadurch gekennzeichnet, daß der wenigstens eine Greifkopf (14) zumindest in einer ersten, horizontalen Achse zwischen der Transportstrecke und der Einrichtung (12) zum Ablegen und Entnehmen der Formatteile (F) sowie in einer zweiten vertikalen Achse bewegbar ist.

4. Transporteinrichtung nach Anspruch 3, dadurch gekennzeichnet, daß der wenigstens eine Greifkopf (14) in einer dritten horizontalen Achse bewegbar ist, die senkrecht zu der ersten und der zweiten Achse verläuft.

5. Transporteinrichtung nach Anspruch 3 oder 4, dadurch gekennzeichnet, daß der wenigstens eine Greifkopf (14) um mindestens eine Achse, vorzugsweise um die zweite, vertikale Achse drehbar oder schwenkbar ist.

6. Transporteinrichtung nach einem der Ansprüche 1 - 5, dadurch gekennzeichnet, daß die Mittel (23, 24) zum Ent-und Verriegeln des wenigstens einen Befestigungsorgans (25, 29) an dem wenigstens einen Greifkopf (14) vorgesehen sind.

7. Transporteinrichtung nach einem der Ansprüche 1 - 6, dadurch gekennzeichnet, daß das wenigstens eine Befestigungsorgan durch ein schiebende oder ziehende Bewegung und/oder durch eine drehende Bewegung ent- und verriegelbar ist.

8. Transporteinrichtung nach einem der Ansprüche 1 - 7, dadurch gekennzeichnet, daß das Formatteil (F) eine Angriffsfläche (26) für die Mittel (22) zum Greifen und Halten bildet, und zwar vorzugsweise im Bereich des wenigstens einen Befestigungsorgans (25).

9. Transporteinrichtung nach Anspruch 8, dadurch gekennzeichnet, daß die Angriffsfläche als Fläche eines Kegels (26) oder als Hinterschneidungsfläche ausgebildet ist.

10. Transporteinrichtung nach einem der Ansprüche 1 - 9, dadurch gekennzeichnet, daß die Mittel zum Greifen und Halten von wenigstens zwei am wenigstens einen Greifkopf (14) vorgesehenen Greifbacken (22) gebildet sind, die aufeinander zu und voneinander weg bewegbar sind, und zwar vorzugsweise jeweils gleichsinnig in bezug auf eine Greifkopfachse (GA).

11. Transporteinrichtung nach Anspruch 10, dadurch gekennzeichnet, daß die Mittel zum Ent- und Verriegeln ein einen Mitnehmer oder ein Kupplungsstück (23) aufweisen, welches mit einem Gegenstück (27) des wenigstens einen Befestigungsorgans (25) zusammenwirkt.

12. Transporteinrichtung nach Anspruch 11, dadurch gekennzeichnet, daß das wenigstens eine Kupplungsstück (23) von den Mitteln zum Greifen und Halten (22) umschlossen ist.

13. Transporteinrichtung nach einem der Ansprüche 1 - 12, dadurch gekennzeichnet, daß das wenigstens eine Befestigungsorgan (25) Teil eines Schnellverschlusses, beispielsweise eines Bajonett-Verschlusses ist.

14. Transporteinrichtung nach einem der Ansprüche 1 - 13, dadurch gekennzeichnet, daß zusätzlich zu dem wenigstens einem Befestigungsorgan (25) Mittel (30, 31) zum Zentrieren des Formatteils (F) an diesem und an dem jeweiligen Funktionsteil der Transporteinrichtung vorgesehen sind, wobei diese Mittel vorzugsweise von Vorsprüngen oder Stiften (30) und zugehörigen Aufnahmen (31) gebildet sind.

15. Transporteinrichtung nach einem der Ansprüche 1 - 14, dadurch gekennzeichnet, daß der wenigstens eine Greifkopf (14) an einer Schlittenanordnung (15) vorgesehen ist, die entlang einer Führung (16) zwischen der Transportstrecke und der Einrichtung (12) zum Ablegen und Entnehmen von Formatteilen (F) bewegbar ist.

16. Transporteinrichtung nach Anspruch 15, gekennzeichnet durch einen Stellantrieb (17) zum Bewegen der Schlittenanordnung (15) entlang der Führung (16) sowie durch wenigstens einen weiteren Stellantrieb (18, 19) zum Absenken und/oder Schwenken des Greifkopfes (14).

17. Transporteinrichtung nach einem der Ansprüche 1 - 16, dadurch gekennzeichnet, daß die Einrichtung (12) zum Ablegen und Entnehmen von Formatteilen (F) tisch- oder wagenartig ausgebildet ist.

18. Transporteinrichtung nach einem der Ansprüche 1 - 17, dadurch gekennzeichnet, daß die Einrichtung zum Ablegen und Entnehmen von Formatteilen (F) regal- oder schrankartig ausgebildet ist.

19. Transporteinrichtung nach einem der Ansprüche 1 - 18, dadurch gekennzeichnet, daß die Formatteile (F) Transportsterne (4, 5, 7) und/oder Führungsbögen bildende Führungsstücke (8, 9, 10) sind.

20. Transporteinrichtung nach einem der Ansprüche 1 - 19, dadurch gekennzeichnet, daß an dem wenigstens einen Greifkopf (14) eine Abtasteinrichtung (32) zum Erfassen einer Markierung (33) auf dem Formatteil (F) vorgesehen ist.
